# EUROPEAN PATENT APPLICATION

(11) **EP 1 816 394 A1**
(43) Date of publication of application: **08.08.2007**
(21) Application number: 05809188.5
(22) Date of filing: 25.11.2005
(51) Int. Cl.: F21V 8/00, G02B 6/00, F21Y 101/02

(54) **LIGHT EMITTING BODY AND LIGHT EMITTING SYSTEM**

(30) Priority: 26.11.2004 JP 2004341899; 26.11.2004 JP 2004341900; 26.11.2004 JP 2004341901
(71) Applicant: Asahi Kasei Chemicals Corporation, Tokyo 100-8440 (JP)
(72) Inventor: UMENIWA, Nobuyoshi Asahi Kasei Chemicals Corp.,, Tokyo 100-8440 (JP); SAKATA, Kanako ITO GOSEI CO., LTD.,, Higashiosaka-shi, Osaka 579-8064 (JP)
(74) Representative: Fischer, Heinrich
(86) International application number: PCT/JP2005/021706
(87) International publication number: WO 2006/057347

(57) **Abstract**

This invention provides an illuminator emitting light with light from a light source, the illuminator having: a coating layer including a first light scattering agent; and a substrate layer including a second light scattering agent, a ratio of a thickness of the coating layer to a thickness of the substrate layer being 1/300 to 1/7, and a ratio of a light scattering agent concentration of the coating layer to a light scattering agent concentration of the substrate layer being 100/1 to 2,000/1.

## Description

### FIELD OF THE INVENTION

This invention relates to an illuminator that emits light with light from a light source as well as to an illumination system that has the illuminator and the light source.

### BACKGROUND ART

In an illuminator that emits light with light from a light source, the light emitted from the light source is guided to the inside of the illuminator and repeats reflection many times inside the illuminator before exiting to the outside of the illuminator. Accordingly, a path of the light inside the illuminator becomes long, and the light is attenuated before exiting from the illuminator. Therefore, there have been demands for an illuminator having good transparency and a light source that is high in directivity.

Also, if is desirable that the illuminator emits light in a direction perpendicular to a surface of the illuminator or in a direction close to the perpendicular direction. However, since the light guided to the inside of the illuminator is reflected repeatedly until the light exits to the outside of the illuminator as mentioned above, the light is hardly emitted in the perpendicular direction, and almost all part of the emitted light exits in a direction along the surface of the illuminator. As a result, there is a problem that the conventional illuminator is not so luminous to human eyes.

In order to solve such problem, Patent Document 1, for example, discloses a planar illuminator that is capable of emitting light with light from an LED lamp not only from lateral faces of a plate-like light transmitting member but from upper and lower surfaces thereof in a more uniform state by forming a linear groove on a surface of the plate-like light transmitting member made from a transparent acryl plate and causing the LED lamp to emit light with the LED lamp being inserted into an indented portion formed in one of the lateral faces of the plate-like light transmission member.

Patent Document 2 discloses a planar illuminator wherein plural linear grooves are formed in parallel to one another on a rear surface of a transparent light guiding plate, and point luminous bodies each emitting light from a direction perpendicular to the grooves toward the inside of the light guiding plate are disposed on a lateral portion of the light guiding plate.

Patent Document 3 discloses an illuminator wherein a planar illuminator is formed by attaching a transparent member formed of a transparent synthetic resin layer that does not contain any light scattering agent to a semitransparent member formed of a semitransparent synthetic resin layer containing a light scattering agent, and an LED array is disposed on one of end faces of the planar illuminator.

Patent Document 4 discloses an illuminator wherein an LED lamp is inserted into a fixing hole provided on one of end faces of a plate-like acryl member having light transmittivity, and a reflection tape is attached to parts other than a light emitting surface of the acryl member.

Patent Document 5 discloses a planar illuminator device capable of obtaining radiant light from a main surface of a second light guiding body by coupling a lateral face light emitting part of a stick-like first light guiding body having a point light source at its front end with one of lateral ends of the plate-like second light guiding body.

Patent Document 6 discloses a stacked plate illuminator formed of a coating layer containing a light scattering agent and a base layer that does not contain any light scattering agent.

Patent Document 1: JP-A-2000-348518
Patent Document 2: JP-A-2002-100226
Patent Document 3: JP-A-11-329044
Patent Document 4: JP-A-8-076703
Patent Document 5: JP-A-11-191307
Patent Document 6: JP-A-2004-327204

### DISCLOSURE OF THE INVENTION

### PROBLEMS TO BE RESOLVED BY THE INVENTION

However, in the conventional examples: it is impossible to obtain the planar illuminator without the linear grooves with the technologies of Patent Documents 1 and 2; it is impossible to form the planar illuminator without attaching the transparent member with the semitransparent member with the technology of Patent Document 3; the technology of Patent Document 4 has a problem that the illuminator has the only one light emitting surface and requires the reflection tape that is attached to the part other than the light emitting surface; it is impossible to obtain the planar illuminator without the first illuminator that converts the point light source into a linear light source with the technology of Patent Document 5; and the technology of Patent Document 6 is poor in light emitting property.

This invention solves the above problems, and an object thereof is to provide an illuminator capable of obtaining satisfactory light emission from a top face (principal surface) and end faces and an illumination system having the illuminator and a light source.

### MEANS OF SOLVING THE PROBLEMS

In order to solve the problems of the conventional technologies, the inventors of this invention found that, by adding a light scattering agent to a resin having light transmittivity and forming a substrate layer and a coating layer of an illuminator by using the resin containing the light scattering agent, it is possible to obtain an illuminator capable of obtaining satisfactory light emission from all faces including a top face and end faces (lateral faces) except for a light incident face to which light from a light source is made incident without forming grooves, pictures, letters, or the like.
That is, the object of this invention was attained by an illuminator and an illumination system described below.

The invention is an illuminator emitting light with light from a light source, the illuminator comprising: a coating layer comprising a first light scattering agent; and a substrate layer comprising a second light scattering agent, a ratio of a thickness of the coating layer to a thickness of the substrate layer being 1/300 to 1/7, and a ratio of a light scattering agent concentration of the coating layer to a light scattering agent concentration of the substrate layer being 100/1 to 2,000/1.

Also, according to a first preferred embodiment of the invention, the coating layer comprises: a first light transmitting resin; and the first light scattering agent, and the substrate layer comprises: a second light transmitting resin; and the second light scattering agent.

Also, according to a second preferred embodiment of the invention, the first light transmitting resin is a methacrylic resin.

Also, according to a third preferred embodiment of the invention, the second light transmitting resin is a methacrylic resin.

Also, an illumination system according to the invention comprises: the above illuminator; and a light source, and the light source is an LED light source.

### ADVANTAGEOUS EFFECTS OF THE INVENTION

According to this invention, it is possible to obtain an illuminator capable of improving a luminance ratio L₁₀/L₂₁₀ and excellent in luminance.
The luminance ratio L₁₀/L₂₁₀ represents a ratio between a luminance L₁₀ of illuminator 1 at a position 10 mm from the light source and a luminance L₂₁₀ of the illuminator 1 at a position 210 mm from the light source. An illuminator having a luminance ratio close to 1 is excellent in uniformity as an illuminator.

According to the first preferred embodiment of this invention, since it is easy to manufacture the illuminator, it is possible to realize bulk production and a reduction in cost.

According to the second or third preferred embodiment of this invention, it is possible to achieve the best light emitting property.

According to the illumination system of this invention, it is possible to realize an illumination system having a high luminance at a position distant from the light source. It is possible to realize an illumination system capable of producing various light emissions by appropriately changing a color or a light emission time of the LED light source.

### BRIEF DESCRIPTION OF THE DRAWINGS

[Fig. 1(a)] Fig. 1(a) is a perspective view showing a structure of an illuminator according to this invention.
[Fig. 1 (b)] Fig. 1 (b) is a plan view showing the structure of the illuminator according to this invention.
[Fig. 2] Fig. 2 is a schematic diagram showing a state of light emission from a top face and an end face of the illuminator according to this invention.
[Fig. 3] Fig. 3 is a diagram showing a picture showing a state of light emission from an actual illuminator.
[Fig. 4] Fig. 4 is a schematic diagram showing a method of measuring luminance of the illuminator according to this invention.
[Fig. 5] Fig. 5 is a diagram showing a distance between the top face of the illuminator and a light source and distribution of luminance.

### DESCRIPTION OF THE REFERENCE NUMERALS AND SIGNS

1: illuminator
2: LED light source

### BEST MODE FOR CARRYING OUT THE INVENTION

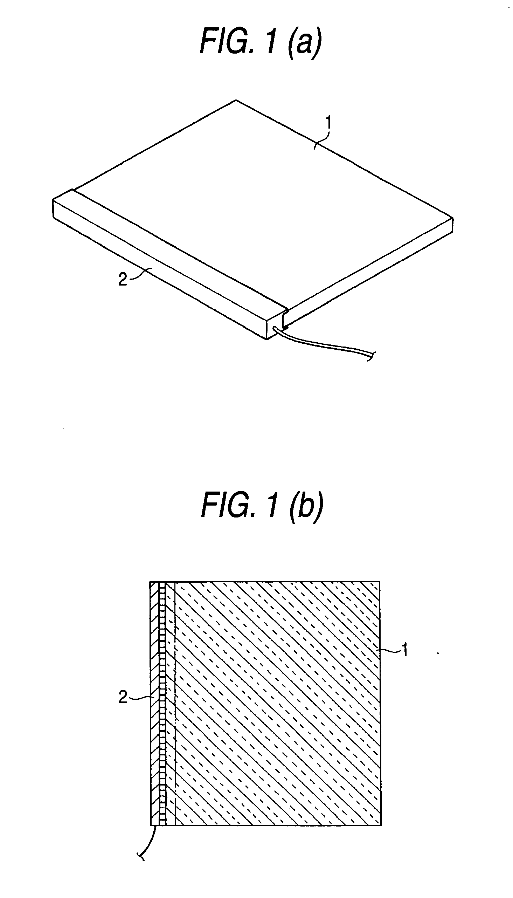

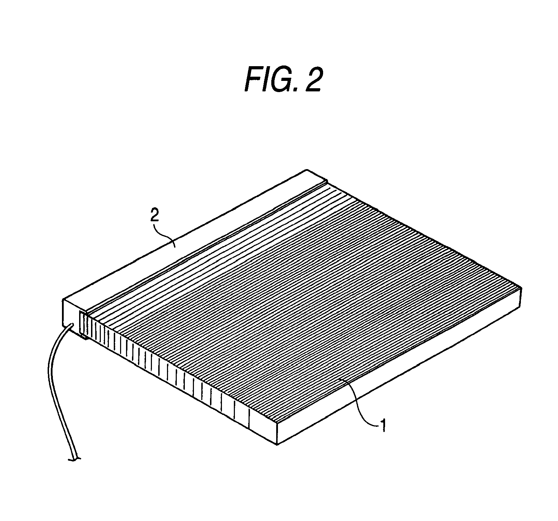

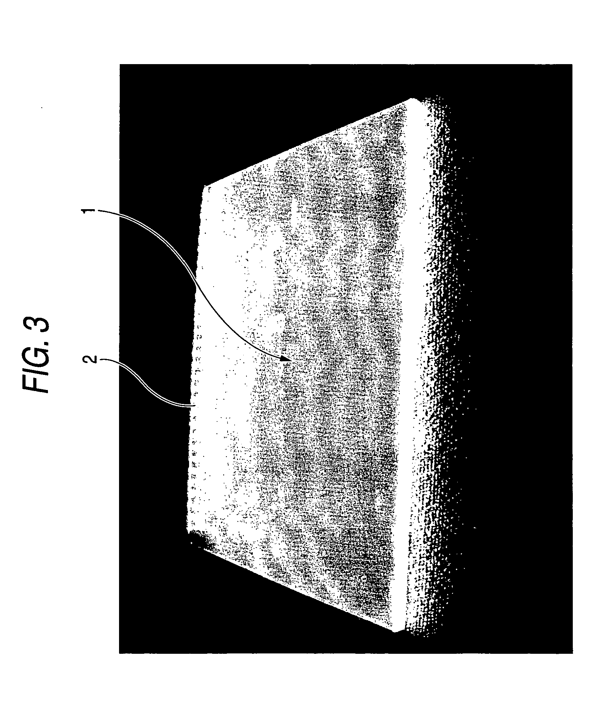

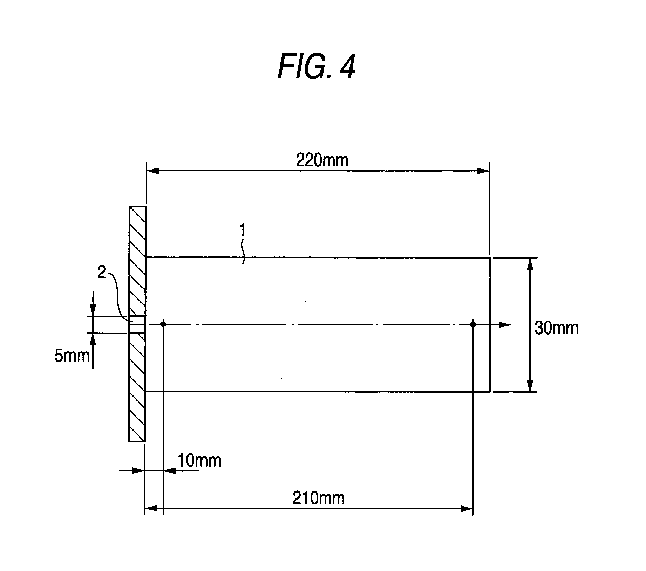

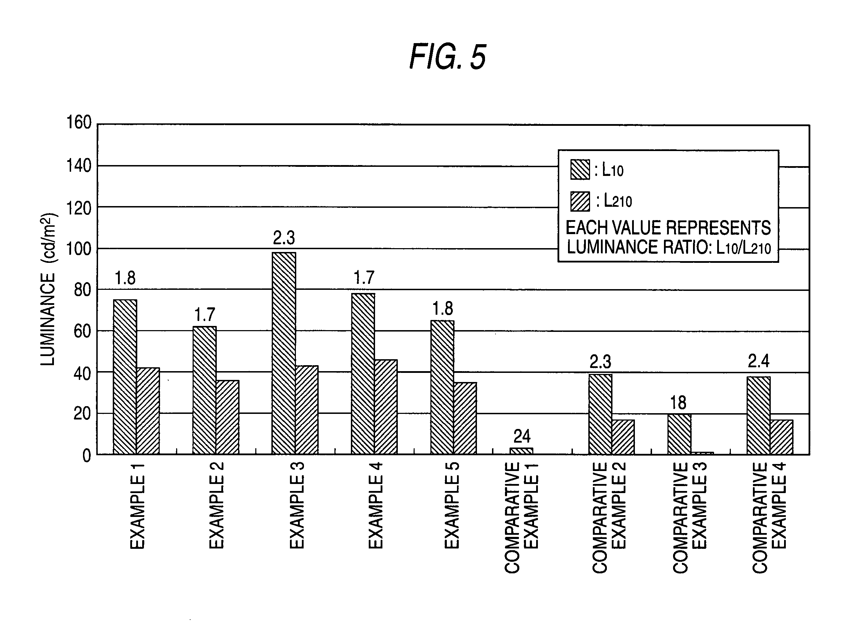

Hereinafter, one embodiment of an illuminator and an illumination system having the illuminator and a light source according to this invention will be specifically described with reference to the drawings. Figs. 1(a) and 1(b) are a perspective view and a plan view showing a structure of the illuminator according to this invention; Fig. 2 is a schematic diagram showing a state of light emission from a top face and end faces of the illuminator according to this invention; Fig. 3 is a diagram showing a picture showing a state of light emission from an actual illuminator; Fig. 4 is a schematic diagram showing a method of measuring luminance of the illuminator according to this invention; and Fig. 5 is a diagram showing a distance between the top face of the illuminator and a light source and distribution of luminance.

In Figs. 1 to 3, an illuminator 1 that emits light with light emitted from an LED (Light Emitting Diode) light source 2 is shown as one example of light source. Shown in Fig. 4 is a schematic diagram showing a luminance measurement method, and a cold cathode tube is used as the light source in Fig. 4.

The illuminator of this invention has a coating layer containing a first light scattering agent and a substrate layer containing a second light scattering agent. In this invention, the coating layer may preferably be formed from a first resin having light transmittivity (hereinafter referred to as light transmitting resin) and the first light scattering agent, and the substrate layer may preferably be formed from a second light transmitting resin and the second light scattering agent.
The first light scattering agent and the second light scattering agent may be the same or different from each other. Also, the first light transmitting resin and the second light transmitting resin may be the same or different from each other.

For example, the illuminator 1 of the embodiment shown in Figs. 1 to 3 has the substrate layer and the coating layer each of which is obtained by forming into a sheet-like shape a thermoplastic resin in which the light scattering agent is dispersed. As such thermoplastic resin sheet, it is possible to use either one of an extruded sheet manufactured by extrusion and a cast sheet manufactured by casting.

As the light transmitting resin forming the substrate layer and the coating layer of the illuminator of this invention, various thermoplastic resins are usable, and preferred examples thereof include a methacrylic resin, a polycarbonate resin, a styrene-based resin, a cyclic olefin-based resin, an amorphous polyester resin, and like optical materials, among which the methacrylic resin is more preferred.

Hereinafter, the resins that are usable as the resin for forming the substrate layer and the coating layer of the illuminator of this invention will be described in more detail.

The methacrylic resin is obtainable by copolymerizing 70 wt% or more of methyl methacrylate or ethyl methacrylate with a monomer that is copolymerizable with the methyl methacrylate or ethyl methacrylate. Monomers that are usable as the monomer copolymerizable with the methyl methacrylate or ethyl methacrylate include ester methacrylates such as butyl methacrylate, ethyl methacrylate, methyl methacrylate, propyl methacrylate, cyclohexyl methacrylate, phenyl methacrylate, and 2-ethylhexyl methacrylate; ester acrylates such as methyl acrylate, ethyl acrylate, butyl acrylate, cyclohexyl acrylate, phenyl acrylate, and 2-ethylhexyl acrylate; unsaturated acids such as methacrylic acid and acrylic acid; and the like.

As the substrate layer and the coating layer of the illuminator, a heat resistant methacrylic resin, a low hygroscopic methacrylic resin, an impact resistance methacrylic resin, and the like are also usable. The impact resistant resin is obtainable by blending a methacrylic resin with a rubber elastic body, for example. As one example of such rubber elastic body, a multistage polymer obtainable by forming an elastic layer and a non-elastic layer alternately around an acryl-based polymer core material, which is manufactured by multistage sequential polymerization, is known. By blending the methacrylic resin with the rubber elastic body, it is possible to obtain the impact resistant methacrylic resin.

In the case of using the polycarbonate resin as the resin for forming the substrate layer and the coating layer of the illuminator, a polymer derived from a divalent phenol-based compound such as bisphenol A is used as the polycarbonate resin. A manufacture method of the polycarbonate resin is not particlarly limited, and it is possible to employ a known method such as a phosgene method, ester conversion, and solid phase polymerization.

The cyclic olefin-based resin is a polymer having a cyclic olefin skeleton in a polymer chain of norbornene, cyclohexanediene, or the like or a copolymer containing such polymer and belongs to the amorphous thermoplastic resin. A manufacture method thereof is not particularly limited. For example, TOPAS (trade name) which is an ethylene-norbornene copolymer manufactured by Ticona is usable as the cyclic olefin resin mainly containing norbornene, and ZEONEX (trade name) manufactured by Zeon Corporation is usable as a cyclopentadiene ring opening polymer.

The styrene-based resin is a homopolymer or a copolymer containing styrene as an essential component or a polymer blend obtainable from the homopolymer or the copolymer with other resin. In this invention, it is preferable to use an AB resin which is a copolymer resin of polystyrene, acrylonitrile, and styrene or an MS resin which is a copolymer resin of ester methacrylate and styrene.

Further, a transparent reinforcing resin in which a rubber is distributed in a styrene-based resin phase may preferably be used. A manufacture method of the styrene resin is not particularly limited, and it is possible to manufacture the styrene-based resin by a known method.

Usable as the amorphous polyester are amorphous resins among polyesters formed of aliphatic glycol such as ethylene glycol, propylene glycol, 1,4-butanediol, neopentyl glycol, and hexamethylene glycol; alicyclic glycol such as cyclohexanedimethanol; and an aromatic dihydroxy compound such as bisphenol, 1,3-bis(2-hydroxyethoxy)benzene, and 1,4-bis(hydroxyethoxy)benzene; or a dihydroxy compound unit selected from two or more of the above and aromatic dicarboxylic acid such as terephthalic acid, isophthalic acid, and 2,6-naphthalene dicarboxylic acid; aliphatic dicarboxylic acid such as oxalic acid, adipic acid, sebacic acid, a succinic acid, and undecadicarboxylic acid; and alicyclic dicarboxylic acid such a hexahydrotelephthalic acid; or a dicarboxylic acid unit selected from two or more of the above.

A method for manufacturing the amorphous polyester is not particularly limited, and it is possible to manufacture the amorphous polyester by a known method. Examples of a commercially available bland of the amorphous polyester which is easily purchased include KODAR PTEC which is a product of Eastman KodaK Company, PCTA, and the like.

Also, it is possible to add a flexible polymer to the resin for forming the substrate layer and the coating layer of the illuminator of this invention when.so required. Usable as the flexible polymer are an olefin-based flexible polymer made from α-olefin; an isobutylene-based flexible polymer made from isobutylene; a diene-based flexible polymer made from a conjugate diene such as butadiene and isoprene; a cyclic olefin-based flexible polymer made from cyclic olefin such as norbornene and cyclopentene; an organic polysiloxane-based flexible polymer; a flexible polymer made from α,β-unsaturated acid and a derivative thereof; a flexible polymer made from unsaturated alcohol and amine or an acyl derivative thereof or acetal; a polymer of an epoxy compound; a fluorine-based rubber; and the like.

Examples of a material usable as the light scattering agent to be contained in the substrate layer and the coating layer of the illuminator include inorganic fine particles such as calcium carbonate, barium sulfate, alumina, titanium dioxide, silicon dioxide, and glass beads; organic fine particles such as styrene crosslinked beads, MS crosslinked beads, and siloxane-based crosslinked beads; and the like. Also, hollow crosslinked fine particles made from a resin material having high transparency such as a methacryl-based resin, a polycarbonate-based resin, an MS resin, and a cyclic olefin resin, a hollow fine particles made from glass, and the like are usable as the light scattering agent. The light scattering agent may preferably be dispersed in the resin forming the substrate layer and the coating layer.

Form of the light scattering agent to be dispersed into the substrate layer and the coating layer of the illuminator is not particularly limited, and spherical, ball-like, planar fan-like, cubic, planar rhomboid-like, hexagonal crystal-like, and amorphous light scattering agents may be used as the light scattering agent.

The illuminator of this invention has a specific layer structure. That is, the illuminator of this invention has the substrate layer which is lower in concentration of the light scattering agent and the coating layer which is higher in concentration of the light scattering agent, and a ratio between thicknesses of the substrate layer and the coating layer is at a specific value.
More specifically, in this invention, a ratio of the thickness of the coating layer to the thickness of the substrate layer is 1/300 to 1/7, and a ratio of the light scattering agent concentration of the coating layer to the light scattering agent concentration of the substrate layer is 100/1 to 2,000/1.
Hereinafter, the ratio of the thickness of the coating layer to the thickness of the substrate layer will be referred to as "coating layer/substrate layer thickness ratio", and the ratio of the light scattering agent concentration of the coating layer to the light scattering agent concentration of the substrate layer will be referred to as "coating layer/substrate layer light scattering agent concentration ratio".
As used herein, the light scattering agent concentration means a weight fraction defined by ppm of the light scattering agent contained in the light transmitting resin.
In this invention, the coating layer/substrate layer thickness ratio may be preferably in the range of 1/200 to 1/15 when the coating layer/base material light scattering agent concentration ratio is in the range of 200/1 to 1,500/1, and, more preferably, the coating layer/substrate layer thickness ratio may be the range of 1/100 to 1/25 when the coating layer/base material light scattering agent concentration ratio is 300/1 to 1,000/1.

Hereinafter, a manufacture method of the illuminator of this invention will be described.

In this invention, it is preferable to use a composition obtained by dispersing the light scattering agent into the light transmitting resin for the substrate layer and the coating layer. As described above, it is preferable to use the thermoplastic resin as the light transmitting resin in this invention.
When fine particles of the light scattering agent are dispersed uniformly into the light transmitting resin in the light transmitting resin composition containing the light transmitting resin and the light scattering agent, a method for preparing the light transmitting resin composition is not particularly limited. Note that it is preferable to prepare the light transmitting resin composition by using a dispersion obtained by dispersing the fine particles of the light scattering agent into an organic liquid.

As the method for preparing the light transmitting resin composition for forming the illuminator, it is preferable to prepare the light transmitting resin composition by using a dispersion obtained by dispersing fine particles of the light scattering agent into an organic liquid. In order to uniformly disperse the fine particles of the light scattering agent into the organic liquid, it is preferable to use a supersonic wave generator.

As used herein, the organic liquid means general organic liquids and includes polymerizable monomers forming light transmitting resins, and those in which the fine particles of the light scattering agent are hardly or never dissolved or swollen and are uniformly dispersed may be used without particular limitation. Also, several types of the organic liquids may be mixed at arbitrary proportions depending on a state of dispersion of the fine particles of the light scattering agent to be used as the organic liquid.

Usable as the general organic liquid are ketones such as acetone and methylethylketone; aromatic series such as xylene and toluene; and alcohols such as methanol and ethanol. Also, usable as the polymerizable monomer when the light transmitting resin is the methacrylic resin, for example, are ester methacrylates such as methyl methacrylate, ethyl methacrylate, propyl methacrylate, butyl methacrylate, cyclohexyl methacrylate, phenyl methacrylate, and 2-ethylhexyl methacrylate; ester acrylates such as methyl acrylate, ethyl acrylate, butyl acrylate, cyclohexyl acrylate, phenyl acrylate, and 2-ethylhexyl acrylate; unsaturated acids such as methacrylic acid and acrylic acid; and the like.

In the case of preparing the light transmitting resin composition containing the light transmitting resin and fine particles of the light scattering agent to be used as the substrate layer and the coating layer of the illuminator, it is possible to employ the following method (1) or (2) as a method for uniformly dispersing the fine particles of the light scattering agent in the light transmitting resin.

(1) A method of melting and kneading the transparent thermoplastic resin and the fine particles of the light scattering agent to be used as the substrate layer and the coating layer by using an extruder:
   In this method, the fine particles of the light scattering agent are dispersed into the organic liquid preferably by using a supersonic wave generator to prepare a light scattering agent dispersion. After mixing the light scattering agent dispersion with the light transmitting resin, the mixture is melted and kneaded by using an extruder. The organic liquid is not particularly limited insofar as the fine particles of the light scattering agent are uniformly dispersed in the organic liquid without being dissolved or swollen as describe above. Also, several types of the organic liquids may be mixed at arbitrary proportions to be used as the organic liquid depending on a state of dispersion.

Though it is possible to arbitrarily decide a mixing ratio between the fine particles of the light scattering agent and the organic liquid in view of a dispersion property of the fine particles of the light scattering agent, it is preferable to mix 0.001 to 80 parts by weight of the fine particles of the light scattering agent with 100 parts by weight of the organic liquid.

Also, though it is possible to arbitrarily decide a mixing ratio between the light scattering agent dispersion formed of the fine particles of the light scattering agent and the organic liquid and the light transmitting resin to be used as the base material of the illuminator in view of a handling property in the mixing and extruding step, it is preferable to mix 0.001 to 10 parts by weight of the dispersion with 100 parts by weight of the light transmitting resin used as the base material of the illuminator.

The method of mixing the light scattering agent dispersion with the light transmitting resin is not particularly limited, and it is possible to perform the mixing by a known mixing method such as a method of using a henschel mixer, a method of using a super floater, and a method of using a tumbler.

The extruder used for melting and kneading the mixture is not necessarily a specialized one, and an ordinary uniaxial or biaxial extruder may be used. Note that the extruder that is capable of volatilization under a reduced pressure of 300 Torr or less at the vent may preferably be used from the stand point of eliminating volatile component of the organic liquid used for the dispersion. Further, as a die, a multilayer die capable of controlling a thickness of coating is used.

From the view point of prevention of secondary aggregation of the fine particles of the scattering agent, it is preferable to use the biaxial extruder. A temperature of the extruder may be set arbitrarily depending on the type of the light transmitting resin to be used. For example, in the case of using the methacrylic resin as the light transmitting resin, the temperature is about 180°C to 260°C.

(2) A method of obtaining the illuminator through polymerization by casting:
In this case, it is possible to employ a method of dispersing the fine particles of the light scattering agent into the raw material monomer of the light transmitting resin used as the base material or the monomer copolymerizable with the monomer preferably by using a supersonic wave generator. In this method, it is preferable to use the fine particles of the light scattering agent by dispersing the fine particles into a part of the raw material monomer and then mixing the dispersion with a partially polymerized polymer solution or the like. It is possible to decide a ratio between the fine particles of the light scattering agent and the raw material monomer in which the fine particles are dispersed depending on a dispersion property, a viscosity at feeding, a handling property, and the like.

Polymerization conditions such as a polymerization temperature, a polymerization time, and a polymerization initiator in the casting and a method for forming a sheet (cast plate) to be used as the illuminator are not particularly limited. As the method for forming the sheet, it is possible to employ glass cell casting, continuous casting, or the like, for example.

The supersonic wave generating apparatus used for dispersing the fine particles is not particularly limited, and it is possible to use commercially available supersonic wave cleaners, supersonic wave stirrers, and the like. For example, a supersonic wave cleaner having a supersonic wave frequency of 28 to 100 kHz is generally used. Though it is possible to arbitrarily set an irradiation time of the supersonic wave generator based on a state of dispersion of the fine particles of the light scattering agent, it is generally preferable to irradiate for about 1 to 60 minutes.

It is possible to form an illumination system by using the illuminator of this invention and an LED light source.

As the LED light source, it is possible to use a light source having a printed substrate and an LED chip array including plural pairs of red LED chips, green LED chips, and blue LED chips that are formed on the printed substrate or a light source of 3-in-1 type wherein chips of three primary colors are used as one chip.

### EXAMPLES

The present invention is now illustrated in greater detail with reference to Examples, but it should be understood that the present invention is not to be construed as being limited thereto.

A light transmittance measurement method in the examples is as follows. COLOR AND COLOR DIFFERENCE METER MODEL TC-1500MC which is a product of TOKYO DENSHOKU CO., LTD. was used as a measurement device; standard light was used as a light source; and tristimulus values X, Y, and Z of a light flux passing through a test sample having a length of 220 mm (8 mm in width, 30 mm in height, 220 mm in length) at a visual angle of 10 degrees were measured. The Y value was used as the light transmittance.

### (Example 1)

2.5 ppm of alumina having an average particle diameter of 0.5 µm was blended with DELPET LP-1 (methacrylic resin; product of Asahi Kasei Chemicals) as a light scattering agent to prepare a substrate layer resin. Further, 1,000 ppm of the same alumina was blended with DELPET LP-1 to prepare a coating layer resin. The substrate layer resin was filled into an extruder having a screw diameter of 120 mmφ and L/D (extrusion length/extrusion diameter) of 32, and the coating layer resin was filled into an extruder having a screw diameter of 40 mmφ and L/D (extrusion length/extrusion diameter) of 32. By using the extruders, a stacked sheet having a thickness of 8 mm and a width of 1,000 mm was formed by extrusion to obtain an illuminator. A thickness of the coating was 200 µm.

As a method of measuring the average particle diameter of the light scattering agent, fine particles of the slight scattering agent were dispersed into an organic liquid by way of supersonic wave, and then the thus-obtained dispersion was measured by using a micro tracking method, whereby a 50% accumulated particle diameter was detected as the average diameter.

A test piece having the size of a length of 220 mm, a width of 30 mm, and a thickness of 8 mm was obtained from the stacked sheet by cutting, and the cut surface was polished. A light transmittance of the test piece in a 220 mm light path, which was measured by employing the above-described measurement method as shown in Fig. 4, was 42%.

Further, as shown in Fig. 4, a cold cathode tube having a light entrance width of 5 mm was disposed at a central part of one end face of the test piece, and luminance of upper surface of the test piece was measured by using BM-7 (product of Topcon Corporation) as a measurement apparatus and at a visual angle of one degree with a distance between a luminance meter and the test piece being 50 cm. A luminance (L₁₀) of the test piece at a position of 10 mm from the light source was 75 cd/m², and a luminance (L₂₁₀) of the test piece at a position of 210 mm from the light source was 42 cd/m². A luminance ratio L₁₀/L₂₁₀ was 1.8.

### (Example 2)

In Example 2, a test piece was obtained by extruding a multilayer sheet in the same manner as in Example 1 except for changing the amount of the light scattering agent of the substrate layer to 1.5 ppm. A light transmittance of the test piece was 60%; L₁₀ was 62 cd/m²; L₂₁₀ was 36 cd/m²; and a luminance ratio L₁₀/L₂₁₀ was 1.7.

### (Example 3)

In Example 3, a test piece was obtained by extruding a stacked sheet in the same manner as in Example 1 except for changing the amount of the light scattering agent of the substrate layer to 5 ppm. A light transmittance of the test piece was 25%; L₁₀ was 98 cd/m²; L₂₁₀ was 43 cd/m²; and a luminance ratio L₁₀/L₂₁₀ was 2.3.

### (Example 4)

In Example 4, a test piece was obtained by extruding a stacked sheet in the same manner as in Example 1 except for changing the thickness of the coating layer of the sheet to 100 µm and changing the amount of the alumina concentration, which is the light scattering agent concentration, of the coating layer to 2,000 ppm. A light transmittance of the test piece was 41%; L₁₀ was 78 cd/m²; L₂₁₀ was 46 cd/m²; and a luminance ratio L₁₀/L₂₁₀ was 1.7.

### (Example 5)

In Example 5, a test piece was obtained by extruding a stacked sheet in the same manner as in Example 1 except for changing the light scattering agent of the coating layer to calcium carbonate having an average particle diameter of 7.5 µm and changing the amount of the light scattering agent of the coating layer to 3,500 ppm. A light transmittance of the test piece was 40%; L₁₀ was 65 cd/m²; L₂₁₀ was 36 cd/m²; and a luminance ratio L₁₀/L₂₁₀ was 1.8.

### (Comparative Example 1)

In Comparative Example 1, a test piece was obtained by extruding a single-layer sheet which did not contain any light scattering agent. A light transmittance of the test piece was 87%; L₁₀ was 3.1 cd/m²; L₂₁₀ was 0.13 cd/m²; and a luminance ratio L₁₀/L₂₁₀ was 24.

### (Comparative Example 2)

In Comparative Example 2, a test piece was obtained by extruding a single-layer sheet in the same manner as in Comparative Example 1 except for changing the amount of the light scattering agent to 12 ppm. A light transmittance of the test piece was 13%; L₁₀ was 39 cd/m²; L₂₁₀ was 17 cd/m²; and a luminance ratio L₁₀/L₂₁₀ was 2.3.

### (Comparative Example 3)

In Comparative Example 3, a test piece was obtained by extruding a single-layer sheet in the same manner as in Comparative Example 1 except for changing the amount of the light scattering agent to 2 ppm. A light transmittance of the test piece was 45%; L₁₀ was 20 cd/m²; L₂₁₀ was 1.1 cd/m²; and a luminance ratio L₁₀/L₂₁₀ was 18.

### (Comparative Example 4)

In Comparative Example 4, a test piece was obtained by extruding a stacked sheet in the same manner as in Example 1 except for not adding the light scattering agent to the substrate layer. A light transmittance of the test piece was 82%; L₁₀ was 38 cd/m²; L₂₁₀ was 17 cd/m²; and a luminance ratio L₁₀/L₂₁₀ was 2.4.

### [Visual Test]

A test piece having the size of a length of 300 mm, a width of 200 mm, and a thickness of 8 mm was obtained from each of the sheets obtained by Examples 1 to 4 and Comparative Examples 1 to 4 by cutting. Each of the obtained test pieces were polished, and then a light source was disposed at an end face having a length of 300 mm (end face in longitudinal direction) to conduct a visual test by 10 panelists (A- J) including illumination designers and interior designers. Results of the test are shown in Table 1. Evaluation standards in Table 1 are as follows:
oo means remarkably beautiful with sufficient light emission from a principal face and end faces;
o means remarkably beautiful with light emission from a principal face and end faces slightly inferior to oo;
Δ means beautiful but light emission from a principal face and end faces was insufficient;
× means light emission from a principal face and end faces was hardly perceived or inferior in light emission uniformity.

**Table 1**

| | | Ex.1 | Ex.2. | Ex.3 | Ex.4 | Ex.5 | Comp. Ex.1 | Comp. Ex.2 | Comp. Ex.3 | Comp. Ex.4 |
|---|---|---|---|---|---|---|---|---|---|---|
| Visual Test | Light Transmittance | 42 | 60 | 25 | 41 | 40 | 87 | 13 | 45 | 82 |
| | L₁₀/L₂₁₀ | 1.8 | 1.7 | 2.3 | 1.7 | 1.8 | 24 | 2.3 | 18 | 2.4 |
| | L₁₀ | 75 | 62 | 98 | 78 | 65 | 3.1 | 39 | 20 | 38 |
| | L₂₁₀ | 42 | 36 | 43 | 46 | 36 | 0.13 | 17 | 1.1 | 17 |
| A | | ○○ | ○○ | ○ | ○○ | ○ | × | ○ | × | ○ |
| B | | ○○ | ○ | ○○ | ○○ | ○ | × | Δ | × | Δ |
| C | | ○○ | ○○ | ○ | ○○ | ○○ | × | ○ | × | ○ |
| D | | ○○ | ○ | ○○ | ○○ | ○ | × | Δ | × | Δ |
| E | | ○○ | ○○ | ○○ | ○○ | ○○ | × | ○ | × | ○ |
| F | | ○○ | ○○ | ○○ | ○○ | ○○ | × | Δ | × | Δ |
| G | | ○○ | ○○ | ○ | ○○ | ○○ | × | Δ | × | Δ |
| H | | ○○ | ○○ | ○○ | ○○ | ○○ | × | ○ | × | ○ |
| I | | ○ | ○ | ○ | ○○ | ○○ | × | Δ | × | Δ |
| J | | ○○ | ○○ | ○ | ○○ | ○○ | × | Δ | × | Δ |

As shown in Table 1, Comparative Example 1 received poor evaluation from all of the 10 panelists since the light emission from the principal face and the end faces was not perceived at all, and Examples 1 to 4 received high evaluation due to a remarkably beautiful light emission balance and excellence in design and because the panelists perceived the light emission from the principal face and the end faces as excellent. Comparative Examples 2 and 4 received evaluation that is inferior to Examples 1 to 5 due to the lower luminance despite the good luminance ratio.

Shown in Fig. 5 is a relationship (L₁₀, L₂₁₀) between a distance from the light source and luminance of each of Examples and Comparative Examples. The base material, the light scattering agent, the manufacture method, the luminance measurement method, and the like of the illuminators are as described in Examples and Comparative Examples.

Fig. 5 shows that the addition of the light scattering agent to the base material and the coating is effective for improving the luminance and the luminance ratio. Also, depending of the type of the light scattering agent, the content and the average particle diameter are not limited to those of Examples, and it is possible to select the content and the average particle diameter arbitrarily according to a balance between the light transmittance and a light scattering property of an illuminator.

While the present invention has been described in detail and with reference to specific embodiments thereof, it will be apparent to one skilled in the art that various changes and modifications can be made therein without departing from the spirit and scope thereof.

This patent application is based on Japanese patent application (Patent Application No. 2004-341899) filed on November 26, 2004, Japanese patent application (Patent Application No. 2004-341900) filed on November 26, 2004, and Japanese patent application (Patent Application No. 2004-341901) filed on November 26, 2004, and contents of the Japanese patent applications are incorporated herein by reference.

### INDUSTRIAL APPLICABILITY

This invention is applicable widely to display devices of cabinets, showcases, partitions, signs, and the like; indication light of emergency exit, lavatories, and the like; illumination appliances such as surface emitting illumination devices and surface emitting/edge emitting illumination devices; building materials such as panels, partitions, and walls; housing equipments such as kitchen, bathrooms, stairs, closets, name boards, and floor illumination; large game appliances such as arcade game appliances and hoods; and the like.

## Claims

1. An illuminator emitting light with light from a light source, the illuminator comprising:
a coating layer comprising a first light scattering agent; and
a substrate layer comprising a second light scattering agent,
a ratio of a thickness of the coating layer to a thickness of the substrate layer being 1/300 to 1/7, and
a ratio of a light scattering agent concentration of the coating layer to a light scattering agent concentration of the substrate layer being 100/1 to 2,000/1.

2. The illuminator according to claim 1,
wherein the coating layer comprises: a first light transmitting resin; and the first light scattering agent, and
the substrate layer comprises: a second light transmitting resin; and the second light scattering agent.

3. The illuminator according to claim 2,
wherein the first light transmitting resin is a methacrylic resin.

4. The illuminator according to claim 2,
wherein the second light transmitting resin is a methacrylic resin.

5. An illumination system comprising:
the illuminator according to any one of claims 1 to 4; and
a light source,
the light source being an LED light source.
